# EUROPEAN PATENT APPLICATION

(11) **EP 4 345 622 A1**
(43) Date of publication of application: **03.04.2024**
(21) Application number: 22827634.1
(22) Date of filing: 22.06.2022
(51) Int. Cl.: G06F 9/54

(54) **SERVICE PROCESS CALLING METHOD AND RELATED DEVICE**

(30) Priority: 23.06.2021 CN 202110699029
(71) Applicant: Huawei Technologies Co., Ltd., Shenzhen, Guangdong 518129 (CN)
(72) Inventor: PENG, Yu, Shenzhen, Guangdong 518129 (CN); YANG, Hongyang, Shenzhen, Guangdong 518129 (CN); XIE, Xiaolong, Shenzhen, Guangdong 518129 (CN)
(74) Representative: Isarpatent
(86) International application number: PCT/CN2022/100585
(87) International publication number: WO 2022/268142

(57) **Abstract**

This application provides a service process invoking method and a related apparatus. The method includes: An application process obtains a context of a binder process; the application process obtains a handle of a service process based on the context of the binder process; the application process runs a program of the binder process based on the context of the binder process, to obtain a context of the service process based on the handle of the service process; and the application process runs a program of the service process based on the context of the service process, to respond to a binder request of the application process, where the binder request is used to request a system service provided by the service process. In embodiments of this application, actual power consumption is accurately reflected.

## Description

This application claims priority to Chinese Patent Application No. 202110699029.3, filed with the China National Intellectual Property Administration on June 23, 2021 and entitled "SERVICE PROCESS INVOKING METHOD AND RELATED APPARATUS", which is incorporated herein by reference in its entirety.

### TECHNICAL FIELD

This application relates to the field of computer technologies, and in particular, to a service process invoking method and a related apparatus.

### BACKGROUND

Currently, an Android operating system usually uses a binder to implement inter-process communication (inter-process communication, IPC). From the perspective of components, the IPC may include a client (client), a server (server), a service manager (service manager) process, and a binder driver. The client is a process that uses a system service, the server is a process that provides a system service, the service manager process is used to convert a binder name in a character format into a reference of the binder in the client, so that the client can obtain a reference of a binder entity in the server by using the binder name. The binder driver is responsible for establishing binder communication between processes and supporting data transfer and interaction between processes at a bottom layer. When the client communicates with the server, the server may create or run a binder process to respond to a binder request initiated by the client. The binder request indicates a requirement of the client for using a system service.

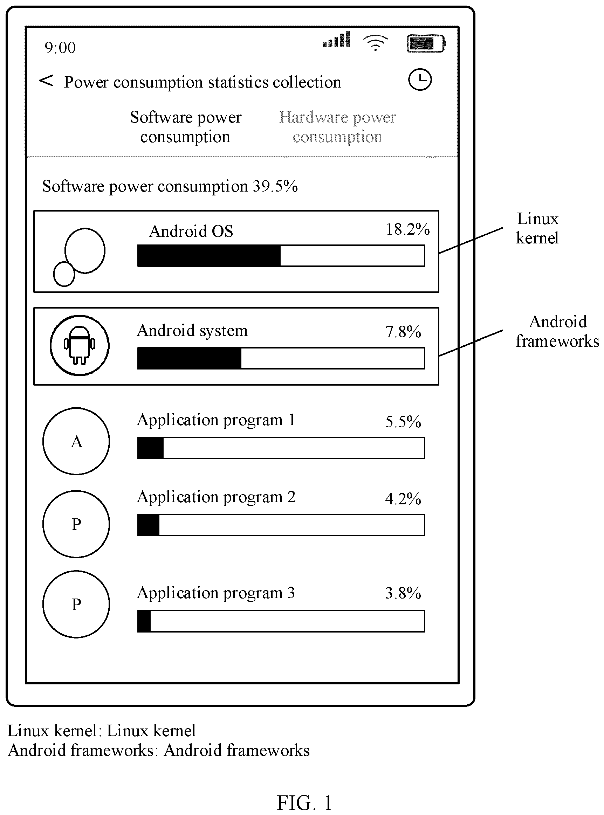

Generally, a plurality of clients may initiate binder requests to a same server at the same time. To be specific, binder requests processed by the server may include binder requests initiated by different clients. In other words, a scheduler keeps scheduling the server. When a power manager service (power manager service, PMS) process collects statistics on a time that the server occupies a central processing unit (central processing unit, CPU), generally, the time that the server occupies the CPU is determined based on a time when the server starts to be scheduled and a time when the server ends to be scheduled. To be specific, the time that the server occupies the CPU is a time that the server occupies the CPU for responding to binder requests initiated by different clients. However, when the PMS process collects statistics on the time that the client occupies the CPU, the time that the client occupies the CPU is also determined based on a time when the client starts to be scheduled and a time when the client ends to be scheduled. Therefore, as collected by the PMS process, the time that the server occupies the CPU is much longer than the time that the client occupies the CPU. In other words, as collected, power consumption of the server is much greater than power consumption of the client. For example, FIG. 1 is a schematic diagram of power consumption statistics collection of an Android system. With reference to FIG. 1, it can be seen that either of power consumption of an Android operating system (OS) (that is, a Linux kernel (kernel)) and power consumption of an Android system (that is, Android application program frameworks (frameworks)) is higher than power consumption of another application program. For example, power consumption of the Android operating system (OS) is higher than power consumption of an application program 1. To be specific, in a current power consumption statistics collection manner, the power consumption of the server obtained through statistics collection is much greater than the power consumption of the client, which seriously deviates from actual power consumption of the system. Therefore, how to accurately reflect the actual power consumption becomes an urgent technical problem to be resolved at a current stage.

### SUMMARY

This application provides a service process invoking method and a related apparatus, to accurately reflect actual power consumption.

According to a first aspect, a service process invoking method is provided, including:
An application process obtains a context of a binder process;
the application process obtains a handle of a service process based on the context of the binder process;
the application process runs a program of the binder process based on the context of the binder process, to obtain a context of the service process based on the handle of the service process; and
the application process runs a program of the service process based on the context of the service process, to respond to a binder request of the application process, where the binder request is used to request a system service provided by the service process.

It can be learned that, in the foregoing technical solution, the application process obtains the context of the binder process to obtain the handle of the service process based on the context of the binder process, so that the program of the binder process can be run based on the context of the binder process, to obtain the context of the service process based on the handle of the service process, and run the program of the service process based on the context of the service process to respond to the binder request of the application process. As a result, in a case that the scheduler keeps scheduling the application process without performing process switching, communication between the application process and the service process is completed. It may be understood that, in a case that the scheduler keeps scheduling the application process without performing process switching, a process occupying the CPU is always the application process, so that a time of occupying the CPU may be counted on the application process, thereby avoiding a problem that power consumption of the service process is much greater than power consumption of the application process in power consumption statistics collection, and accurately reflecting actual power consumption. More accurate and reliable data is provided for core functions such as power consumption control and system running time prediction. In addition, because the application process may run the program of the service process based on the context of the service process, to respond to the binder request of the application process, a problem that a CPU occupation time cannot be traced is avoided, that is, a time of occupying the CPU by the service process in responding to the binder request may be accurately allocated to the application process, to learn a real reason of power consumption. Finally, because a communication process between different processes does not need to be scheduled, inter-process communication efficiency is improved.

It should be understood that although this application is proposed based on a widely used IPC mechanism binder of an Android system, a provided method is not limited to the Android system or the binder. An IPC communication method similar to the binder in another system may also be used in this application, and should fall within an equivalent use scope of this application.

Optionally, that the application process obtains a context of a binder process includes:
The application process obtains the context of the binder process from a call stack.

Optionally, that the application process obtains a handle of a service process based on the context of the binder process includes:
The application process runs the program of the binder process based on the context of the binder process, to obtain a handle of a service manager process;
the application process obtains a context of the service manager process based on the handle of the service manager process; and
the application process runs a program of the service manager process based on the context of the service manager process, to obtain the handle of the service process based on an identifier of a system service requested by the application process.

It can be learned that, in the foregoing technical solution, the application process runs the program of the binder process based on the context of the binder process, to obtain the handle of the service manager process, so that the context of the service manager process can be obtained based on the handle of the service manager process, and the program of the service manager process can be run based on the context of the service manager process, to obtain the handle of the service process based on the identifier of the system service requested by the application process. As a result, in a case that the scheduler keeps scheduling the application process without performing process switching, the handle of the service process is obtained, so that a process occupying the CPU is always the application process. Therefore, a time of occupying the CPU may be counted on the application process, thereby avoiding a problem that power consumption of the service process is much greater than power consumption of the application process in power consumption statistics collection, and accurately reflecting actual power consumption. Accurate and reliable data is provided for core functions such as power consumption control and system running time prediction. In addition, because a communication process between different processes does not need to be scheduled, inter-process communication efficiency is improved.

Optionally,
that the application process runs the program of the binder process based on the context of the binder process, to obtain a handle of a service manager process includes:
The application process runs the program of the binder process based on the context of the binder process, to obtain the handle of the service manager process from a memory of the binder process.

According to a second aspect, a service process invoking method is provided, including:
An application process in a processor obtains a context of a binder process;
the application process in the processor obtains a handle of a service process based on the context of the binder process;
the application process in the processor runs a program of the binder process based on the context of the binder process, to obtain a context of the service process based on the handle of the service process; and
the application process in the processor runs a program of the service process based on the context of the service process, to respond to a binder request of the application process, where the binder request is used to request a system service provided by the service process.

It can be learned that, in the foregoing technical solution, the application process in the processor obtains the context of the binder process to obtain the handle of the service process based on the context of the binder process, so that the program of the binder process can be run based on the context of the binder process, to obtain the context of the service process based on the handle of the service process, and run the program of the service process based on the context of the service process to respond to the binder request of the application process. As a result, in a case that the scheduler keeps scheduling the application process without performing process switching, communication between the application process and the service process is completed. It may be understood that, in a case that the scheduler keeps scheduling the application process without performing process switching, a process occupying the CPU is always the application process, so that a time of occupying the CPU may be counted on the application process, thereby avoiding a problem that power consumption of the service process is much greater than power consumption of the application process in power consumption statistics collection, and accurately reflecting actual power consumption. Accurate and reliable data is provided for core functions such as power consumption control and system running time prediction. In addition, because the application process may run the program of the service process based on the context of the service process, to respond to the binder request of the application process, a problem that a CPU occupation time cannot be traced is avoided, that is, a time of occupying the CPU by the service process in responding to the binder request may be accurately allocated to the application process, to learn a real reason of power consumption. Finally, because a communication process between different processes does not need to be scheduled, inter-process communication efficiency is improved.

Optionally, that the application process in the processor obtains a context of a binder process includes:
The application process in the processor obtains the context of the binder process from a call stack.

Optionally, that the application process in the processor obtains a handle of a service process based on the context of the binder process includes:
The application process in the processor runs the program of the binder process based on the context of the binder process, to obtain a handle of a service manager process;
the application process in the processor obtains a context of the service manager process based on the handle of the service manager process; and
the application process in the processor runs a program of the service manager process based on the context of the service manager process, to obtain the handle of the service process based on an identifier of a system service requested by the application process.

It can be learned that, in the foregoing technical solution, the application process in the processor runs the program of the binder process based on the context of the binder process, to obtain the handle of the service manager process, so that the context of the service manager process can be obtained based on the handle of the service manager process, and the program of the service manager process can be run based on the context of the service manager process, to obtain the handle of the service process based on the identifier of the system service requested by the application process. As a result, in a case that the scheduler keeps scheduling the application process without performing process switching, the handle of the service process is obtained, so that a process occupying the CPU is always the application process. Therefore, a time of occupying the CPU may be counted on the application process, thereby avoiding a problem that power consumption of the service process is much greater than power consumption of the application process in power consumption statistics collection, and accurately reflecting actual power consumption. Accurate and reliable data is provided for core functions such as power consumption control and system running time prediction. In addition, because a communication process between different processes does not need to be scheduled, inter-process communication efficiency is improved.

Optionally, that the application process in the processor runs the program of the binder process based on the context of the binder process, to obtain a handle of a service manager process includes:
The application process in the processor runs the program of the binder process based on the context of the binder process, to obtain the handle of the service manager process from a memory of the binder process.

Optionally, before the application process in the processor runs a program of the service manager process based on the context of the service manager process, to obtain the handle of the service process based on an identifier of a system service requested by the application process, the method further includes:
The service process in the processor obtains the context of the binder process;
the service process in the processor obtains the handle of the service manager process based on the context of the binder process;
the service process in the processor runs the program of the binder process based on the context of the binder process, to obtain the context of the service manager process based on the handle of the service manager process;
the service process in the processor runs the program of the service manager process based on the context of the service manager process, to store, in an associated manner, an identifier of a system service provided by the service process and the handle of the service process in a memory of the service manager process; and
that the application process in the processor runs a program of the service manager process based on the context of the service manager process, to obtain the handle of the service process based on an identifier of a system service requested by the application process includes:
   The application process in the processor runs a program of the service manager process based on the context of the service manager process, to obtain the handle of the service process based on an identifier of a system service requested by the application process.

It can be learned that, in the foregoing technical solution, the service process in the processor obtains the context of the binder process, to obtain the handle of the service manager process based on the context of the binder process, so that the program of the binder process can be run based on the context of the binder process, to obtain the context of the service manager process based on the handle of the service manager process, and run the program of the service manager process based on the context of the service manager process, so that the identifier of the system service provided by the service process and the handle of the service process are stored in the memory of the service manager process in an associated manner. As a result, in a case that the scheduler keeps scheduling the service process without performing process switching, the identifier of the system service provided by the service process and the handle of the service process are stored in the memory of the service manager process in an associated manner. It may be understood that, in a case that the scheduler keeps scheduling the service process without performing process switching, a process occupying the CPU is always the service process, so that a time of occupying the CPU may be counted on the service process, thereby avoiding a problem that power consumption of the service process is much greater than power consumption of the application process in power consumption statistics collection, and accurately reflecting actual power consumption. Accurate and reliable data is provided for core functions such as power consumption control and system running time prediction. In addition, because a communication process between different processes does not need to be scheduled, inter-process communication efficiency is improved.

Optionally, that the service process in the processor runs the program of the binder process based on the context of the binder process, to obtain a handle of a service manager process includes:
The service process in the processor runs the program of the binder process based on the context of the binder process, to obtain the handle of the service manager process from a memory of the binder process.

According to a third aspect, an electronic device is provided, including a processor and a memory, where the processor invokes, by using an application process, a computer program stored in the memory to implement the method according to any one of the first aspect, or the processor invokes a computer program stored in the memory to implement the method according to any one of the second aspect.

According to a fourth aspect, a computer-readable storage medium is provided, where the computer-readable storage medium stores instructions, and when the instructions run on an electronic device, the electronic device is enabled to perform the method according to any one of the first aspect by using an application process, or a processor in the electronic device is enabled to perform the method according to any one of the second aspect.

According to a fifth aspect, a computer program product including an instruction is provided. When the computer program product is run on an electronic device, the electronic device is enabled to perform the method according to any one of the first aspect by using an application process, or a processor in the electronic device is enabled to perform the method according to any one of the second aspect.

According to a sixth aspect, a chip system is provided. The chip system includes at least one processor and at least one interface circuit; the interface circuit is configured to read an instruction stored in a memory, and send the instruction to the processor; and when the instruction is executed by the processor, the electronic device is enabled to perform the method according to any one of the first aspect by using an application process, or the processor in the electronic device is enabled to perform the method according to any one of the second aspect.

### BRIEF DESCRIPTION OF DRAWINGS

The following briefly describes accompanying drawings used in descriptions of embodiments or a conventional technology.
FIG. 1 is a schematic diagram of power consumption statistics collection of an Android system;
FIG. 2 is a schematic diagram of an IPC architecture;
FIG. 3 is a schematic diagram of a time of occupying a CPU in a process;
FIG. 4 is a schematic diagram of a hardware structure of an electronic device applicable to an embodiment of this application;
FIG. 5 is a structural diagram of a system of a service process invoking method according to an embodiment of this application;
FIG. 6 is a schematic flowchart of a service process invoking method according to an embodiment of this application;
FIG. 7 is a schematic flowchart of another service process invoking method according to an embodiment of this application; and
FIG. 8 is a schematic diagram of a structure of a chip system according to an embodiment of this application.

### DESCRIPTION OF EMBODIMENTS

The following describes the technical solutions in embodiments of this application with reference to the accompanying drawings in embodiments of this application. The terms "system" and "network" may be used interchangeably in embodiments of this application. "/" represents an "or" relationship between associated objects unless otherwise specified. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B each may be singular or plural. Moreover, in the descriptions of this application, unless otherwise specified, "a plurality of' means two or more than two. "At least one of the following items (pieces)" or a similar expression thereof means any combination of these items, including any combination of singular or plural items (pieces). For example, at least one of a, b, or c may indicate: a, b, c, a and b, a and c, b and c, or a, b, and c, where a, b, and c may be singular or plural. In addition, to clearly describe the technical solutions in embodiments of this application, words such as "first" and "second" in embodiments of this application are used for distinguishing between same items or similar items that have basically same functions or purposes. A person skilled in the art may understand that the words such as "first" and "second" do not limit a quantity or an execution sequence, and the words such as "first" and "second" do not indicate a definite difference.

Reference to "an embodiment", "some embodiments", or the like described in embodiments of this application means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

The following explains some terms involved in this application. The following content briefly describes meanings of the terms involved in embodiments of this application, and for better understanding the technical solutions provided in embodiments of this application, does not constitute a limitation on the technical solutions provided in embodiments of this application.

### 1. Application program

An application program runs on an operating system in a form of one or more processes to implement a corresponding function. A process is a running activity of an application program about a data set, and is a basic unit for an operating system to allocate and schedule resources. A process can be considered as a running activity of a CPU in a period of time. It may be understood that the process exists in a memory of an electronic device. When the electronic device runs the process, a specific amount of memory is occupied to load program code or read/write data. Running a process by the electronic device is equivalent to executing, by a processor of the electronic device, program code loaded with the process.

Statistics on power consumption of a process usually depend on a time of occupying a CPU by the process, for example, a time of occupying a CPU by an application process or a time of occupying a CPU by a service process.

### 2. Application process

An application process is a process that uses a system service. To be specific, the application process may be understood as a client included in IPC.

For example, the application process may be a process in an application program having a navigation function, that is, the application process may be a process using a location positioning service; or the application process may be a process in an instant message application program, that is, the application process may be a process using a network connection manager service, which is not limited herein.

The system service is a service provided by a system in the electronic device. For example, the system service may be a service provided by Android frameworks in the electronic device. The system service may include, for example, a window manager service (window manager server, WMS), an activity manager system service (activity manager system service, AMS), a power manager service (power manager service, PMS), a Bluetooth manager service, a status bar manager service, a notification bar manager service, a network status manager service, or a network connection manager service, which is not limited herein. The WMS is used to implement functions related to an interface or a window on the electronic device, such as starting a window, deleting a window, and setting a window level, that is, an animation. The AMS is used to manage an activity (activity) running on an electronic device. The PMS is responsible for processing calculation and decision related to a power supply of an electronic device, for example, controlling a display screen to turn off, turn dark, or turn bright.

It may be understood that, in this application, IPC is implemented by using a binder in the Android system. However, inter-process communication in another system may be implemented by using another mechanism, for example, the method provided in this application may also be used in a binder-similar mechanism.

### 3. Service process

A service process is a process that provides a system service. To be specific, the service process may be understood as a server included in the IPC.

For example, the service process may be a process that provides a location positioning service, or the service process may be a process that provides a network connection manager service, which is not limited herein.

### 4. Service manager process

A service manager process is used to convert a binder name in a character form into a reference of the binder in the application process, so that the application process can obtain a reference of a binder entity in the service process by using the binder name. To be specific, the service manager process may be understood as a service manager included in the IPC.

### 5. Binder process

A binder process is responsible for establishing binder communication between processes and supporting data transfer and interaction between processes at a bottom layer.

For example, the binder process may be responsible for binder communication between an application process and a service process, or the binder process may be responsible for binder communication between an application process and a service manager process, or the binder process may be responsible for binder communication between a service process and a service manager process, which is not limited herein.

To be specific, the binder process may be understood as a binder driver included in the IPC. It may be understood that the binder driver adapts to a protocol processing module at a binder driver layer, so that the application process can complete data protocol processing by obtaining a context of the binder process. In addition, the binder driver needs to adapt to data management at a driver layer. For example, the binder driver may store a handle of a service manager process in a memory of the binder process.

### 6. Context of a process

A context of a process means various states of a process maintained in the operating system, and usually includes a value of a register, a page table, a stack address, and the like, which is not limited herein.

All the processes described above need to be scheduled by a scheduler in the operating system to a processor to run. The scheduler schedules a process to the processor, so that the process runs, which is referred to as that the scheduler schedules a process for short in this application. Before the processor runs code corresponding to a process, a value of a register, a page table, a stack address, and the like need to be set to (or referred to as being switched to) a value recorded in a context of the process. In this way, from a logical perspective, the processor can run the process in the context of the process.

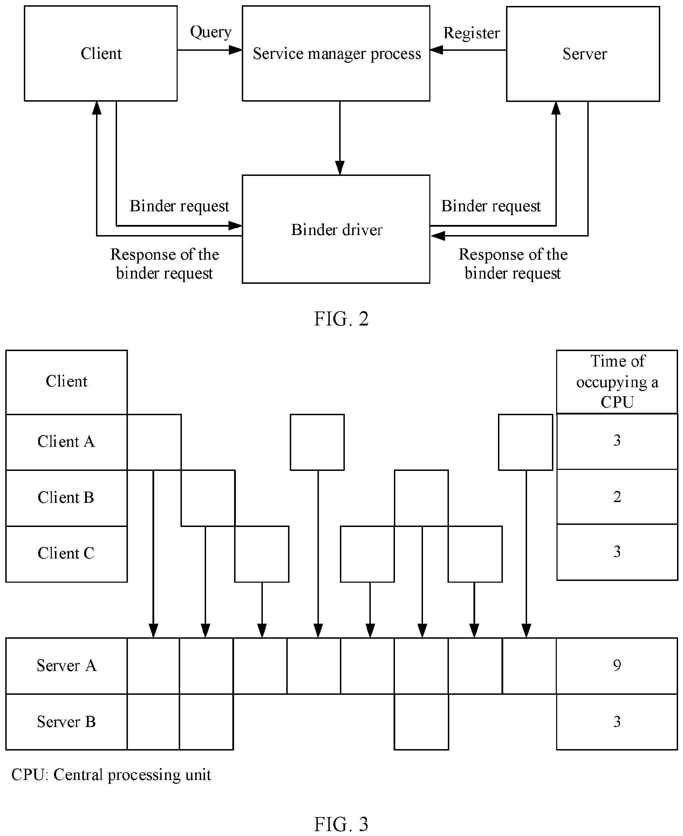

Currently, an Android operating system usually uses a binder to implement IPC. For example, FIG. 2 is a schematic diagram of an IPC architecture. As shown in FIG. 2, IPC may include a client (client), a server (server), a service manager (service manager) process, and a binder driver. An IPC mechanism includes the following three processes: (1) register a service: a server first registers a service with a service manager; (2) obtain a system service: before using a system service, a client needs to obtain corresponding service information from the service manager; and (3) use the system service: the client establishes, based on the obtained service information, a channel with a server that provides the system service, and then interacts with the server to use the system service. When the client communicates with the server, the server may create or run a binder process to respond to a binder request initiated by the client. The binder request indicates a requirement of the client for using a system service. When a service manager process is initialized, the service manager process may be registered as a context manager of the binder driver by using a binder command, and the context manager is globally unique in the binder driver. By default, the binder driver allocates a handle 0 to the context manager. Any client can access the context manager through the handle 0. The context manager provides service registration and service query functions, and the context manager may establish a connection between the client and the server. Specifically, the client may query, from the service manager process by using the binder driver, the handle of the server requested by the client. Then, the client transmits, based on the handle of the server, the binder request to the server by using the binder driver, and obtains, from the server, a response for the binder request.

Generally, a plurality of clients may initiate binder requests to a same server at the same time. To improve efficiency, the server usually creates a thread pool to concurrently process received binder requests. To be specific, binder requests processed by the server include binder requests initiated by different clients. In other words, a scheduler keeps scheduling the server. In a power manager service (power manager service, PMS) process, generally, a time that the server occupies a central processing unit (central processing unit, CPU) is determined based on a time when the server starts to be scheduled and a time when the server ends to be scheduled. For example, FIG. 3 is a schematic diagram of a time of occupying a CPU in a process. As shown in FIG. 3, as collected by a PMS process, times of occupying the CPU by a client A, a client B, and a client C are 3, 2, and 3 respectively, and as collected by the PMS process, a time of occupying the CPU by a server 1 for responding to the client A to the client C is 9. It can be seen that the time of occupying the CPU by the server 1 is much longer than that of the client A, the client B, and the client C. The reason is that when the server responds to a client request, scheduling is completed once. However, the PMS process usually determines, based on a time when the server starts to be scheduled and a time when the server ends to be scheduled, the time that the server occupies the CPU. If the scheduler schedules the server 1 to the CPU to run, a time of occupying the CPU is counted on the server 1. Because the server usually needs to respond to a plurality of client requests, a large amount of power consumption is counted on the server, and a small amount of power consumption is counted on the client, which seriously deviates from actual power consumption of the system. Therefore, how to accurately reflect the actual power consumption becomes an urgent technical problem to be resolved at a current stage.

In view of this, an embodiment of this application proposes a service process invoking method to resolve the foregoing problem. The following describes this embodiment of this application in detail.

It should be understood that the technical solutions in embodiments of this application may be used in an electronic device or a chip in an electronic device. This is not limited herein. It may be understood that, in this application, an Android operating system may be installed on the electronic device. In addition, a type of the electronic device is not specifically limited in this application. For example, the electronic device may be a portable electronic device such as a mobile phone, a tablet computer, a personal digital assistant (personal digital assistant, PDA), or a laptop (laptop).

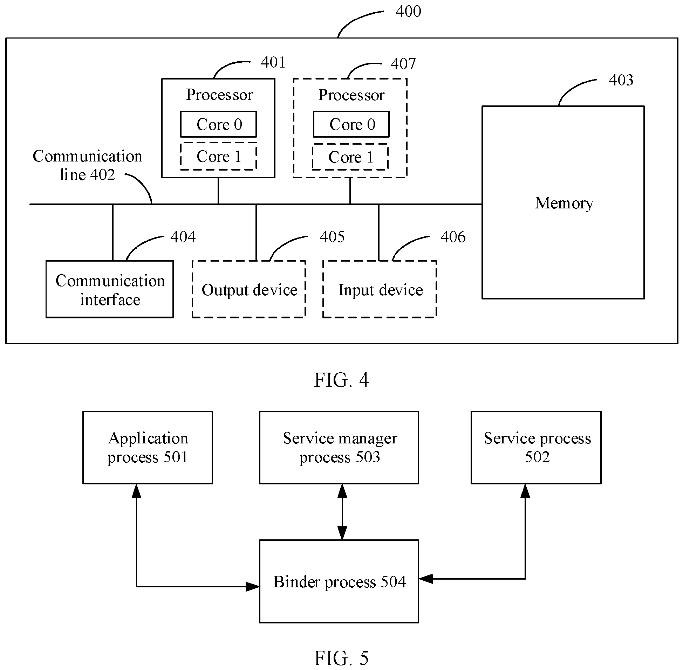

The electronic device in embodiments of this application may be implemented by using an electronic device 400 in FIG. 4. FIG. 4 is a schematic diagram of a hardware structure of an electronic device applicable to an embodiment of this application. The electronic device 400 includes at least one processor 401, a communication line 402, a memory 403, and at least one communication interface 404.

The processor 401 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 402 may include a channel for transmitting information between the foregoing components.

The communication interface 404 is any apparatus (such as an antenna) similar to a transceiver, and is configured to communicate with another device or communication network, such as the Ethernet, a RAN, or a wireless local area network (wireless local area network, WLAN).

The memory 403 may be a read-only memory (read-only memory, ROM) or another type of static storage device that can store static information and instructions, or a random access memory (random access memory, RAM) or another type of dynamic storage device that can store information and instructions. Alternatively, the memory 403 may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer. However, the memory 403 is not limited thereto. The memory may exist independently, and is connected to the processor through the communication line 402. Alternatively, the memory may be integrated with the processor. The memory provided in this embodiment of this application may be usually non-volatile. The memory 403 is configured to store computer-executable instructions for performing the solutions in this application, and the processor 401 controls the execution. The processor 401 is configured to execute the computer-executable instructions stored in the memory 403, to implement methods provided in the following embodiments of this application.

The computer-executable instruction in embodiments of this application may also be referred to as computer-executable code, a computer-readable instruction, software code, code, a program, or the like. This is not specifically limited in embodiments of this application. The method provided in this application may be written by using software code and stored in the memory 403, and then the processor runs the software code to implement the method.

In a possible implementation, the processor 401 may include one or more processing cores (core), for example, a core 0 and a core 1 in FIG. 4.

In a possible implementation, the electronic device 400 may include a plurality of processors, for example, a processor 401 and a processor 407 in FIG. 4. Each of the processors may be a single-core (single-core) processor or a multi-cores (multi-cores) processor. The processor herein may be one or more devices, circuits, and/or processing cores for processing data (for example, computer program instructions).

In a possible implementation, the electronic device 400 may further include an output device 405 and an input device 406. The output device 405 communicates with the processor 401, and may display information in a plurality of manners. For example, the output device 405 may be a liquid crystal display (liquid crystal display, LCD), a light emitting diode (light emitting diode, LED) display device, a cathode ray tube (cathode ray tube, CRT) display device, or a projector (projector). The input device 406 communicates with the processor 401, and may receive an input of a user in a plurality of manners. For example, the input device 406 may be a mouse, a keyboard, a touchscreen device, or a sensor device.

The electronic device 400 may be a general-purpose device or a dedicated device. During specific implementation, the electronic device 400 may be a desktop computer, a portable computer, a network server, a personal digital assistant (personal digital assistant, PDA), a mobile phone, a tablet computer, a wireless electronic device, an embedded device, or a device with a structure similar to that in FIG. 4. A type of the electronic device 400 is not limited in this embodiment of this application.

FIG. 5 is a structural diagram of a system of a service process invoking method according to an embodiment of this application. As shown in FIG. 5, the system architecture may include an application process 501, a service process 502, a service manager process 503, and a binder process 504. For the application process 501, the service process 502, the service manager process 503, and the binder process 504, refer to the foregoing related descriptions. Details are not described herein again. It may be understood that, in this application, the application process 501, the service process 502, the service manager process 503, and the binder process 504 may run on one or more processors in an electronic device or the electronic device, which is not limited herein.

The following describes the technical solutions provided in embodiments of this application with reference to the accompanying drawings.

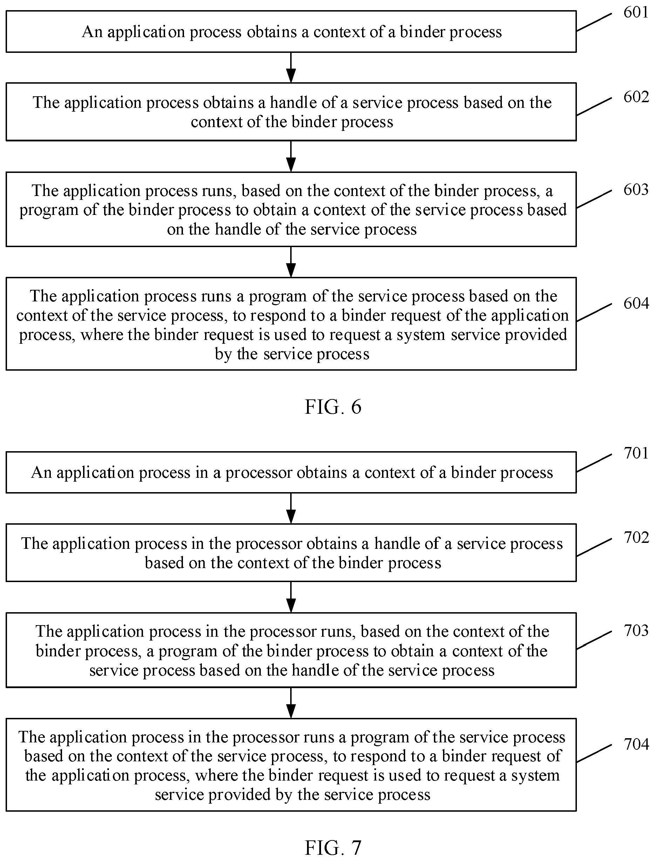

FIG. 6 is a schematic flowchart of a service process invoking method according to an embodiment of this application. In FIG. 6, an example in which an execution body is an application process is used to describe this solution. As shown in FIG. 6, the method includes but is not limited to the following steps.

601: An application process obtains a context of a binder process.

For the application process and the binder process, refer to the foregoing related descriptions. Details are not described herein again.

The context of the binder process may include one or more of the following: a value of a register used by the binder process, a stack address used by the binder process, and a page table used by the binder process, which is not limited herein. It may be understood that the context of the binder process is a context generated after the binder process is started.

In this application, the context of the process may be stored in a data structure. The data structure may be, for example, an actv_s data structure or another data structure, which is not limited herein. It may be understood that the actv_s data structure lists only some general data as an example. In addition, the data structure may be further used for extension, to optimize IPC performance.

```
          struct actv_s {
          struct arch_regs regs;//general register and special register, which store a register
status of the context
          struct arch_fpu_regs fpu_regs;//fpu register, which stores a fpu register status of
the context
          struct tcb_s *tcb;//thread control block, which is in a one-to-one correspondence
with a thread, and stores thread information,
a thread memory instance, and a scheduling unit
of the scheduler
          struct actv_conf_s *conf;//context configuration structure, which is embedded in a
thread control block and a context pool to save a context configuration item
          struct dlist_node pool_list;//linked list node of the context, which is inserted into
the context pool
          struct dlist_node callstack_list;//context call stack node, which identifies a context
at the top of a call stack
          enum actv_state state;//context status, such as initialization, ready, and activated
          bool is_using_fpu;//whether to use a fpu identifier
          bool exception_hard;//hard exception
          bool exception_soft;//soft exception
          }
```

The context of the application process is usually located at the bottom of the call stack (callstack_list), and the context of the binder process is stored at an upper layer of the bottom of the call stack. The context of the service process is stored at the top of the call stack, or the context of the service manager process is stored at the top of the call stack. The call stack may be implemented by using a linked list or another data structure. A data structure in the call stack may be the actv_s data structure or another data structure, which is not limited herein.

Step 601 may include: The application process obtains the context of the binder process from the call stack. For example, the application process obtains the context of the binder process from an upper layer at the bottom of the call stack.

602: The application process obtains a handle of the service process based on the context of the binder process. For the service process and the service manager process, refer to the foregoing related descriptions. Details are not described herein again.

Step 602 may include: The application process runs a program of the binder process based on the context of the binder process, to obtain a handle of the service manager process; the application process obtains a context of the service manager process based on the handle of the service manager process; and the application process runs the program of the service manager process based on the context of the service manager process, to obtain a handle of the service process based on an identifier of a system service requested by the application process.

The handle of the service manager process is a handle allocated by the binder process to the service manager process. For example, the handle of the service manager process may be a handle allocated by the binder process to the service manager process based on a binder command from the service manager process. It may be understood that the binder command may be a command sent by the service manager process to the binder process after the service manager process generates the context of the service manager process. In addition, after the binder process allocates a handle to the service manager process based on the binder command from the service manager process, the binder process may store the handle of the service manager process in the memory of the binder process.

In some embodiments, that the application process runs a program of the binder process based on the context of the binder process, to obtain a handle of the service manager process includes: the application process runs the program of the binder process based on the context of the binder process, to obtain the handle of the service manager process from the memory of the binder process. The handle of the service manager process may be, for example, 0.

In other words, a processor in which the application process is located switches a register, a page table, a stack address, and the like to the context of the binder process, and then the processor runs, in the context of the binder process, a program corresponding to the binder process. Based on the conventional technology, before the program of the binder process is run, the scheduler may first schedule the binder process to the processor. However, in this solution, the scheduler does not need to schedule the binder process. For the scheduler, the application process still runs on the processor.

The context of the service manager process may include one or more of the following: a value of a register used by the service manager process, a stack address used by the service manager process, and a page table used by the service manager process, which is not limited herein. It may be understood that the context of the service manager process is a context generated by the service manager process. For example, the context of the service manager process is a context generated after service information is initialized when the service manager process is started. The service information may include, for example, an identifier of a system service, a storage address of system service data, a function address of a system service function, and a handle. The service information may be adapted based on a specific scenario, and is not limited to the foregoing content.

For example, if the system service requested by the application process is a location positioning service, the handle of the service process may be a handle of a process that provides a location positioning service.

For example, the identifier of the system service may be, for example, a system service name or another identifier, which is not limited herein.

It can be learned that, in the foregoing technical solution, the application process runs the program of the binder process based on the context of the binder process, to obtain the handle of the service manager process, so that the context of the service manager process can be obtained based on the handle of the service manager process, and the program of the service manager process can be run based on the context of the service manager process, to obtain the handle of the service process based on the identifier of the system service requested by the application process. As a result, in a case that the scheduler keeps scheduling the application process without performing process switching (that is, the scheduler considers that the application process keeps occupying a CPU), the handle of the service process is obtained, so that a process occupying the CPU is always the application process from a perspective of the scheduler. Therefore, a time of occupying the CPU may be counted on the application process, thereby avoiding a problem that power consumption of the service process is much greater than power consumption of the application process in power consumption statistics collection, and accurately reflecting actual power consumption. Accurate and reliable data is provided for core functions such as power consumption control and system running time prediction. In addition, because a communication process between different processes does not need to be scheduled, inter-process communication efficiency is improved.

603: The application process runs, based on the context of the binder process, the program of the binder process to obtain the context of the service process based on the handle of the service process.

Optionally, the context of the service process may include one or more of the following: a value of a register used by the service process, a stack address used by the service process, and a page table used by the service process, which is not limited herein. It may be understood that the context of the service process is a context generated by the service process.

604: The application process runs the program of the service process based on the context of the service process, to respond to a binder request of the application process, where the binder request is used to request the system service provided by the service process.

In some other embodiments, before step 604, the method may further include: the application process generates a binder request. It may be understood that when the application process requests the service process to provide the system service, the application process may generate a binder request.

For example, when the application process requests the service process to provide a location positioning service, the application process may generate a binder request.

It can be learned that, in the foregoing technical solution, the application process obtains the context of the binder process to obtain the handle of the service process based on the context of the binder process, so that the program of the binder process can be run based on the context of the binder process, to obtain the context of the service process based on the handle of the service process, and run the program of the service process based on the context of the service process to respond to the binder request of the application process. As a result, in a case that the scheduler keeps scheduling the application process without performing process switching, communication between the application process and the service process is completed. It may be understood that, in a case that the scheduler keeps scheduling the application process without performing process switching, a process occupying the CPU is always the application process, so that a time of occupying the CPU may be counted on the application process, thereby avoiding a problem that power consumption of the service process is much greater than power consumption of the application process in power consumption statistics collection, and accurately reflecting actual power consumption. Accurate and reliable data is provided for core functions such as power consumption control and system running time prediction. In addition, because the application process may run the program of the service process based on the context of the service process, to respond to the binder request of the application process, a problem that a CPU occupation time cannot be traced is avoided, that is, a time of occupying the CPU by the service process in responding to the binder request may be accurately allocated to the application process, to learn a real reason of power consumption. Finally, because a communication process between different processes does not need to be scheduled, inter-process communication efficiency is improved.

The foregoing effect is described by using a CPU as an example. If another processor uses the method provided in this application, a similar effect may also be obtained.

FIG. 7 is a schematic flowchart of a service process invoking method according to an embodiment of this application. In FIG. 7, an example in which an execution body is a processor is used to describe this solution. It may be understood that the processor may be included in an electronic device or a chip in the electronic device. As shown in FIG. 7, the method includes but is not limited to the following steps.

701: An application process in a processor obtains a context of a binder process.

For step 701, refer to step 601 in FIG. 6. Details are not described herein again. It may be understood that a difference between step 701 and step 601 in FIG. 6 lies in that step 701 is executed by an application process in a processor, and step 601 in FIG. 6 is executed by an application process.

702: The application process in the processor obtains a handle of a service process based on the context of the binder process.

For step 702, refer to step 602 in FIG. 6. Details are not described herein again. It may be understood that a difference between step 702 and step 602 in FIG. 6 lies in that step 702 is executed by an application process in a processor, and step 602 in FIG. 6 is executed by an application process.

703: The application process in the processor runs, based on the context of the binder process, a program of the binder process to obtain a context of the service process based on the handle of the service process.

For step 703, refer to step 603 in FIG. 6. Details are not described herein again. It may be understood that a difference between step 703 and step 603 in FIG. 6 lies in that step 703 is executed by an application process in a processor, and step 603 in FIG. 6 is executed by an application process.

704: The application process in the processor runs the program of the service process based on the context of the service process, to respond to a binder request of the application process, where the binder request is used to request a system service provided by the service process.

For step 704, refer to step 604 in FIG. 6. Details are not described herein again. It may be understood that a difference between step 704 and step 604 in FIG. 6 lies in that step 704 is executed by an application process in a processor, and step 604 in FIG. 6 is executed by an application process.

In some other embodiments, before the application process in the processor runs the program of the service manager process based on the context of the service manager process, to obtain the handle of the service process based on the identifier of the system service requested by the application process, the method further includes: the service process in the processor obtains a context of the binder process; the service process in the processor obtains a handle of the service manager process based on the context of the binder process; the service process in the processor runs a program of the binder process based on the context of the binder process, to obtain a context of the service manager process based on the handle of the service manager process; the service process in the processor runs the program of the service manager process based on the context of the service manager process, to store, in an associated manner, an identifier of a system service provided by the service process and the handle of the service process in a memory of the service manager process; and that the application process in the processor runs the program of the service manager process based on the context of the service manager process, to obtain a handle of the service process based on the identifier of the system service requested by the application process includes: the application process in the processor runs the program of the service manager process based on the context of the service manager process, to obtain the handle of the service process from the memory of the service manager process based on the identifier of the system service requested by the application process.

For the context of the binder process, refer to related descriptions of step 601 in FIG. 6. Details are not described herein again.

For the context of the service manager process and the identifier of the system service, refer to related descriptions of step 602 in FIG. 6. Details are not described herein again.

In some embodiments, that the service process in the processor obtains a context of the binder process includes: the service process in the processor obtains the context of the binder process from a call stack.

In some embodiments, that the service process in the processor runs a program of the binder process based on the context of the binder process, to obtain a handle of the service manager process includes: the service process in the processor runs the program of the binder process based on the context of the binder process, to obtain the handle of the service manager process from the memory of the binder process.

In some embodiments, before the service process in the processor runs the program of the service manager process based on the context of the service manager process, to store, in an associated manner, the identifier of the system service provided by the service process and the handle of the service process in the memory of the service manager process, this solution may further include: the service process in the processor may generate a registration request, where the registration request may include the identifier of the system service provided by the service process and the handle of the service process. It may be understood that, after the service process in the processor generates the registration request, the service process in the processor runs the program of the service manager process based on the context of the service manager process, to respond to the registration request, to store, in an associated manner, the identifier of the system service provided by the service process and the handle of the service process in the memory of the service manager process.

For technical effects of this embodiment, refer to the foregoing embodiments.

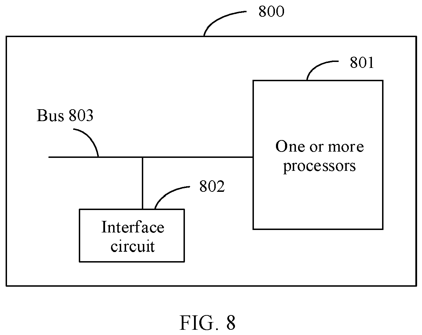

Refer to FIG. 8. An embodiment of this application further provides a chip system 800, including one or more processors 801 and an interface circuit 802. Optionally, the chip system 800 may further include a bus 803. Where:
the processor 801 may be an integrated circuit chip and has a signal processing capability. In an implementation process, steps in the foregoing methods can be implemented through an integrated logical circuit of hardware in the processor 801, or by using instructions in a form of software. The processor 801 may be a general-purpose processor, a digital signal processor (DSP), an application-specific integrated circuit (ASIC), a field programmable gate array (FPGA), or another programmable logic device, a discrete gate or a transistor logic device, or a discrete hardware assembly. The processor 801 may implement or perform the methods and the steps disclosed in embodiments of this application. The general-purpose processor may be a microprocessor, or the processor may be any conventional processor or the like.

The interface circuit 802 may send or receive data, instructions, or information. The processor 801 may process data, instructions, or other information received through the interface circuit 802, and send, through the interface circuit 802, information obtained after processing.

Optionally, the chip system further includes a memory. The memory may include a read-only memory and a random access memory, and provide operation instructions and data for the processor. A part of the memory may further include a non-volatile random access memory (NVRAM).

Optionally, the memory stores an executable software module or a data structure, and the processor may perform a corresponding operation by invoking operation instructions (the operation instructions may be stored in an operating system) stored in the memory.

Optionally, the chip system may be used in the electronic device in embodiments of this application. Optionally, the interface circuit 802 may be configured to output an execution result of the processor 801. For the service process invoking method provided in one or more embodiments of this application, refer to the foregoing embodiments. Details are not described herein again.

It should be noted that functions corresponding to each of the processor 801 and the interface circuit 802 may be implemented by using a hardware design, may be implemented by using a software design, or may be implemented by using a combination of software and hardware. This is not limited herein.

An embodiment of this application further provides an electronic device, including a processor and a memory. The processor invokes, by using an application process, a computer program stored in the memory to implement the method in any possible implementation of FIG. 6, or the processor invokes the computer program stored in the memory to implement the method in any possible implementation of FIG. 7.

An embodiment of this application further provides a computer-readable storage medium. The computer-readable storage medium stores instructions. When the instructions run on an electronic device, the electronic device is enabled to perform the method in any possible implementation of FIG. 6 by using an application process, or a processor in the electronic device is enabled to perform the method in any possible implementation of FIG. 7.

An embodiment of this application further provides a computer program product including an instruction. When the computer program product is run on an electronic device, the electronic device is enabled to perform the method in any possible implementation of FIG. 6 by using an application process, or a processor in the electronic device is enabled to perform the method in any possible implementation of FIG. 7.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

## Claims

1. A service process invoking method, comprising:
obtaining, by an application process, a context of a binder process;
obtaining, by the application process, a handle of a service process based on the context of the binder process;
running, by the application process, a program of the binder process based on the context of the binder process, to obtain a context of the service process based on the handle of the service process; and
running, by the application process, a program of the service process based on the context of the service process, to respond to a binder request of the application process, wherein the binder request is used to request a system service provided by the service process.

2. The method according to claim 1, wherein the obtaining, by an application process, a context of a binder process comprises:
obtaining, by the application process, the context of the binder process from a call stack.

3. The method according to claim 1 or 2, wherein the obtaining, by the application process, a handle of a service process based on the context of the binder process comprises:
running, by the application process, the program of the binder process based on the context of the binder process, to obtain a handle of a service manager process;
obtaining, by the application process, a context of the service manager process based on the handle of the service manager process; and
running, by the application process, a program of the service manager process based on the context of the service manager process, to obtain the handle of the service process based on an identifier of a system service requested by the application process.

4. The method according to claim 3, wherein the running, by the application process, the program of the binder process based on the context of the binder process, to obtain a handle of a service manager process comprises:
running, by the application process, the program of the binder process based on the context of the binder process, to obtain the handle of the service manager process from a memory of the binder process.

5. A service process invoking method, comprising:
obtaining, by an application process in a processor, a context of a binder process;
obtaining, by the application process in the processor, a handle of a service process based on the context of the binder process;
running, by the application process in the processor, a program of the binder process based on the context of the binder process, to obtain a context of the service process based on the handle of the service process; and
running, by the application process in the processor, a program of the service process based on the context of the service process, to respond to a binder request of the application process, wherein the binder request is used to request a system service provided by the service process.

6. The method according to claim 5, wherein the obtaining, by the application process in a processor, a context of a binder process comprises:
obtaining, by the application process in the processor, the context of the binder process from a call stack.

7. The method according to claim 5 or 6, wherein the obtaining, by the application process in the processor, a handle of a service process based on the context of the binder process comprises:
running, by the application process in the processor, the program of the binder process based on the context of the binder process, to obtain a handle of a service manager process;
obtaining, by the application process in the processor, a context of the service manager process based on the handle of the service manager process; and
running, by the application process in the processor, a program of the service manager process based on the context of the service manager process, to obtain the handle of the service process based on an identifier of a system service requested by the application process.

8. The method according to claim 7, wherein the running, by the application process in the processor, the program of the binder process based on the context of the binder process, to obtain a handle of a service manager process comprises:
running, by the application process in the processor, the program of the binder process based on the context of the binder process, to obtain the handle of the service manager process from a memory of the binder process.

9. The method according to claim 7, wherein before the running, by the application process in the processor, a program of the service manager process based on the context of the service manager process, to obtain the handle of the service process based on an identifier of a system service requested by the application process, the method further comprises:
obtaining, by the service process in the processor, the context of the binder process;
obtaining, by the service process in the processor, the handle of the service manager process based on the context of the binder process;
running, by the service process in the processor, the program of the binder process based on the context of the binder process, to obtain the context of the service manager process based on the handle of the service manager process;
running, by the service process in the processor, the program of the service manager process based on the context of the service manager process, to store, in an associated manner, an identifier of a system service provided by the service process and the handle of the service process in a memory of the service manager process; and
the running, by the application process in the processor, a program of the service manager process based on the context of the service manager process, to obtain the handle of the service process based on an identifier of a system service requested by the application process comprises:
running, by the application process in the processor, a program of the service manager process based on the context of the service manager process, to obtain, from the memory of the service manager process, the handle of the service process based on the identifier of the system service requested by the application process.

10. The method according to claim 9, wherein the running, by the service process in the processor, the program of the binder process based on the context of the binder process, to obtain a handle of a service manager process comprises:
running, by the service process in the processor, the program of the binder process based on the context of the binder process, to obtain the handle of the service manager process from a memory of the binder process.

11. An electronic device, comprising a processor and a memory, wherein the processor invokes, by using an application process, a computer program stored in the memory to implement the method according to any one of claims 1 to 4, or the processor invokes the computer program stored in the memory to implement the method according to any one of claims 5 to 10.

12. A computer-readable storage medium, wherein the computer-readable storage medium stores instructions, and when the instructions run on an electronic device, the electronic device is enabled to perform the method according to any one of claims 1 to 4 by using an application process, or a processor in the electronic device is enabled to perform the method according to any one of claims 5 to 10.

13. A computer program product comprising an instruction, wherein when the computer program product is run on an electronic device, the electronic device is enabled to perform the method according to any one of claims 1 to 4 by using an application process, or a processor in the electronic device is enabled to perform the method according to any one of claims 5 to 10.

14. A chip system, wherein the chip system comprises at least one processor and at least one interface circuit; the interface circuit is configured to read an instruction stored in a memory, and send the instruction to the processor; and when the instruction is executed by the processor, the electronic device is enabled to perform the method according to any one of claims 1 to 4 by using an application process, or the processor in the electronic device is enabled to perform the method according to any one of claims 5 to 10.
